# EUROPEAN PATENT SPECIFICATION

(11) **EP 4 177 445 B1**
(45) Date of publication and mention of the grant of the patent: **02.04.2025**
(21) Application number: 21425055.7
(22) Date of filing: 05.11.2021
(51) Int. Cl.: F01D 25/30

(54) **HUB COVER ASSEMBLY FOR AN EXHAUST GAS HOUSING OF A HEAVY-DUTY GAS TURBINE ENGINE, HEAVY-DUTY GAS TURBINE ENGINE AND METHOD OF RETROFITTING A HEAVY-DUTY GAS TURBINE**
NABENABDECKUNGSANORDNUNG FÜR EIN ABGASGEHÄUSE EINER HOCHLEISTUNGSGASTURBINE, HOCHLEISTUNGSGASTURBINE UND VERFAHREN ZUM NACHRÜSTEN EINER HOCHLEISTUNGSGASTURBINE
ENSEMBLE COUVERCLE DE MOYEU POUR UN CARTER DE GAZ D'ÉCHAPPEMENT D'UNE TURBINE À GAZ DE GRANDE PUISSANCE, TURBINE À GAZ DE GRANDE PUISSANCE ET PROCÉDÉ DE MODERNISATION D'UNE TURBINE À GAZ DE GRANDE PUISSANCE

(43) Date of publication of application: 10.05.2023
(73) Proprietor: ANSALDO ENERGIA S.p.A., 16152 Genova (IT)
(72) Inventor: Traverso, Federica, 16152 GENOVA (IT); Cassinelli, Claudio, 16152 GENOVA (IT); Bardetta, Caterina, 16152 GENOVA (IT)
(74) Representative: Studio Torta S.p.A.

(56) References cited:
- EP-A1- 3 599 351
- WO-A1-2015/191039
- US-A1- 2013 195 647
- US-A1- 2015 143 815
- US-A1- 2019 003 339

## Description

### TECHNICAL FIELD

The present invention relates to a hub cover assembly for an exhaust gas housing of a heavy-duty gas turbine engine, to a heavy-duty gas turbine and to a method of retrofitting a heavy-duty gas turbine.

### BACKGROUND

As is known, mismatch in thermal expansion of neighboring components is a common problem in gas turbine engines. In fact, huge temperature gradients may occur in gas turbine engines both in transient and stationary conditions. Differences in constituent material, shape and exposure to hot gas of components often lead to remarkably different thermal expansion, that, in turn, may cause adverse conditions, such as stress, cracks, deformation or relative displacement of parts. For example, seals may be loosened on account of different thermal expansion and start leaking, thus possibly allowing hot gas to reach cold components, which are not designed to withstand high temperatures.

This is also the case of exhaust gas systems of gas turbine engines, especially when parts operated at relatively low temperature are enclosed in a casing that is closed by a cover directly exposed to hot gas. In particular, the exhaust gas housing of an exhaust gas system normally comprises a central hub, in which the rear bearings of the machine rotor are housed. The hub may be closed immediately downstream of the rotor bearings by a cover directly exposed to hot gas in the exhaust flow path. Even if special materials are used, the static temperature difference in use and thermal cycles may impair the sealing function of the cover, causing leakage and ingestion of hot gas, that may result in damages for the bearings.

US 2015/143815 A1 discloses a hub cover assembly for an exhaust gas housing of a heavy-duty gas turbine engine, comprising an adapter ring, configured to be coaxially fitted to a rear end of an exhaust hub of a heavy-duty gas turbine engine, a spacer ring structure, having a first axial end removably and sealingly connectable to the adapter ring, and an external cover applied to a second axial end of the spacer ring structure, whereby the spacer ring structure and the external cover sealingly delimit a chamber laterally and axially on one side.

Other examples of known hub cover assemblies are disclosed in WO 2015/191039 A1, US 2019/003339 A1, EP 3 599 351 A1 and US 2013/195647 A1.

### SUMMARY OF THE INVENTION

It is an aim of the present invention to provide a hub cover assembly for an exhaust gas housing of a heavy-duty gas turbine engine, a heavy-duty gas turbine engine and a method of retrofitting a heavy-duty gas turbine that allow the above limitations to be overcome or at least reduced.

According to the present invention there is provided a hub cover assembly for an exhaust hub of a heavy-duty gas turbine engine, comprising:
an adapter ring, configured to be coaxially fitted to a rear end of an exhaust hub of a heavy-duty gas turbine engine;
a spacer ring structure, having a first axial end removably and sealingly connectable to the adapter ring; and
an external cover applied to a second axial end of the spacer ring structure, whereby the spacer ring structure and the external cover sealingly delimit a cylindrical chamber laterally and axially on one side;
characterized in that the adapter ring comprises a plurality of wedges arranged at a same distance from a center of the adapter ring and projecting axially in a direction opposite to the spacer ring structure.

The hub cover assembly may be fitted to a rear end of an exhaust hub of a gas turbine engine to form a sealed cylindrical chamber that protects the shell of the exhaust hub from excessive thermal stress both in new and existing gas turbine engines. The exhaust hub may in fact accommodate structures designed to operate at relatively low temperature, such as rear bearings of the rotor of the gas turbine engine. The sealed cylindrical chamber which may be formed by the hub cover assembly keeps an intermediate temperature between the temperature of the hot gas flow path and the temperature inside the rear end of the exhaust hub and in practice serves as a temperature buffer that reduces the mechanical stress caused by different thermal expansion. The risk of damages of components exposed to extreme temperatures is therefore effectively attenuated. Moreover, the structure of the hub cover assembly is quite simple and is relatively easy to replace in case of ageing. In any case, the hub cover assembly offers an additional protection to components at the rear end of the exhaust hub.

The adapter ring may also have a function of restoring the original circular shape of the rear end of the exhaust hub, in case of deformation because of mechanical stress.

The wedges help insertion and centering of the adapter ring when the latter is fitted to the rear end of the exhaust hub, especially when deformation has occurred on account of thermal stress during operation of the gas turbine engine.

According to an aspect of the invention, at least some of the wedges comprise respective feet extending radially inwards and preferably the wedges have respective radially outer faces inclined inwards away from the adapter ring.

The wedges provided with feet may be used to carry mechanical load in the coupling of the adapter ring to the rear end of the exhaust hub. The other wedges, if any, may be dedicated to favor insertion and centering.

According to an aspect of the invention, the adapter ring comprises a flange and a circular coupling edge extending axially from the flange in a direction opposite to the spacer ring structure.

The flange and a circular coupling edge define different coupling members that may be separately optimized and are dedicated to coupling to the rear end of the exhaust hub and to the spacer ring structure.

According to an aspect of the invention, the spacer ring structure comprises:
a ring shell, axially extending from the first axial end to the second axial end;
a coupling ring at the first axial end, the coupling ring being removably and sealingly connectable to the adapter ring; and
a cover ring at the second axial end, the external cover being secured to the cover ring.

According to an aspect of the invention, the coupling ring extends radially inwards from the ring shell.

The spacer ring structure thus defined has simple construction and the volume of the chamber can be easily and flexibly selected according to design preferences to provide appropriate temperature buffer function.

According to an aspect of the invention, the adapter ring and the spacer ring structure are formed of respective separable halves.

Separation of the halves helps connection of the spacer ring structure to the rear end of the exhaust hub and makes mounting steps simpler.

According to the present invention there is moreover provided a heavy-duty gas turbine engine, comprising an exhaust hub extending along an axis and a hub cover assembly as defined above, sealingly closing a rear end of the exhaust hub.

According to an aspect of the invention, the exhaust hub comprises an inner cover closing the rear end and the adapter ring is coaxially fitted to the rear end of an exhaust hub around the inner cover.

The inner cover and its connections to the exhaust hub, that would be normally exposed to huge temperature gradients because of the different operating conditions between the inside of the exhaust hub and the hot gas flow path, are effectively protected by the hub cover assembly. In fact, the hub cover assembly forms a chamber at intermediate temperature around the inner casing and thus reduces temperature gradients.

According to the present invention there is moreover provided a method of retrofitting a heavy-duty gas turbine engine, comprising an exhaust hub extending along an axis, the method comprising:
coaxially fitting an adapter ring to a rear end of the exhaust hub;
removably and sealingly connecting a first axial end of a spacer ring structure to the adapter ring; and
applying an external cover to a second axial end of the spacer ring structure, whereby the spacer ring structure and the external cover sealingly delimit a cylindrical chamber laterally and axially on a first side, the chamber being axially delimited by the rear end of the exhaust hub on a second side;
characterized in that the exhaust hub comprises a bearing casing closed by the inner cover and a cylindrical casing arranged concentrically around the bearing casing, with a gap therebetween, wherein the adapter ring comprises a plurality of wedges arranged at a same distance from a center of the adapter ring and projecting axially in a direction opposite to the spacer ring structure; and wherein coaxially fitting the adapter ring comprises inserting the wedges of the adapter ring into the gap.

According to an aspect of the invention, the method comprises forming longitudinal cuts in the cylindrical casing, wherein the longitudinal cuts extend to a rear edge of the cylindrical casing and define axial tabs.

The tabs defined by the longitudinal cuts may be deflected by insertion of the wedges, that is therefore favored. Moreover, the longitudinal cuts and the tabs help restoring the original circular shape of the rear end of the exhaust hub, in case of deformation during operation.

### BRIEF DESCRIPTION OF THE DRAWINGS

The present invention will now be described with reference to the accompanying drawings, which show a number of non-limitative embodiments thereof, in which:
- figure 1 is a cross-sectional side view of a gas turbine engine including a hub cover assembly in accordance with an embodiment of the present invention;
- figure 2 is an enlarged cross-sectional side view of an exhaust gas housing of the gas turbine engine of figure 1;
- figure 3 is an exploded perspective rear view of the exhaust gas housing of figure 2;
- figure 4 is an enlarged cross-sectional side view of a detail of the hub cover assembly of figure 1;
- figure 5 is a perspective front view of a component of the hub cover assembly of figure 1; and
- figure 6 is a perspective rear view of a portion of the exhaust gas housing of figure 2, with parts removed for the sake of clarity.

### DETAILED DESCRIPTION OF EXEMPLARY EMBODIMENTS

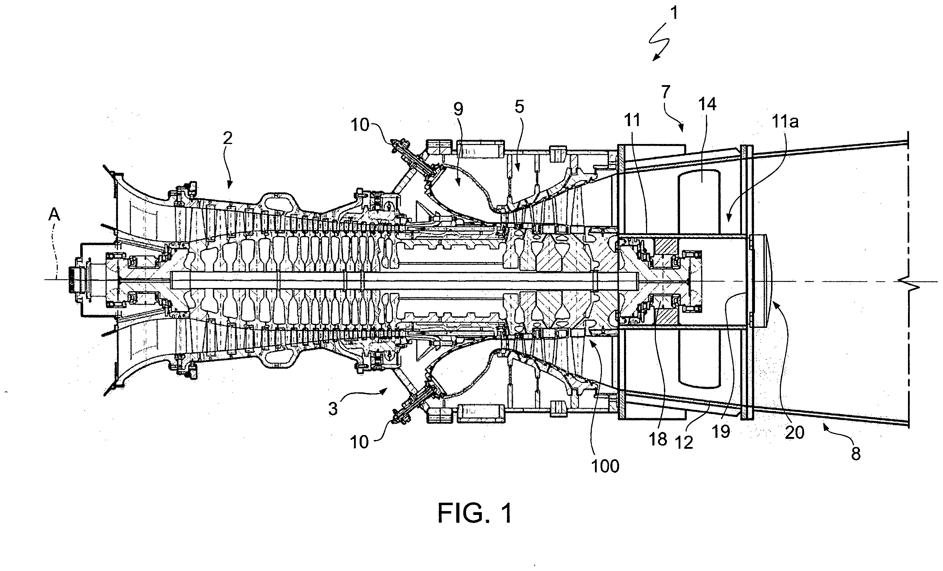

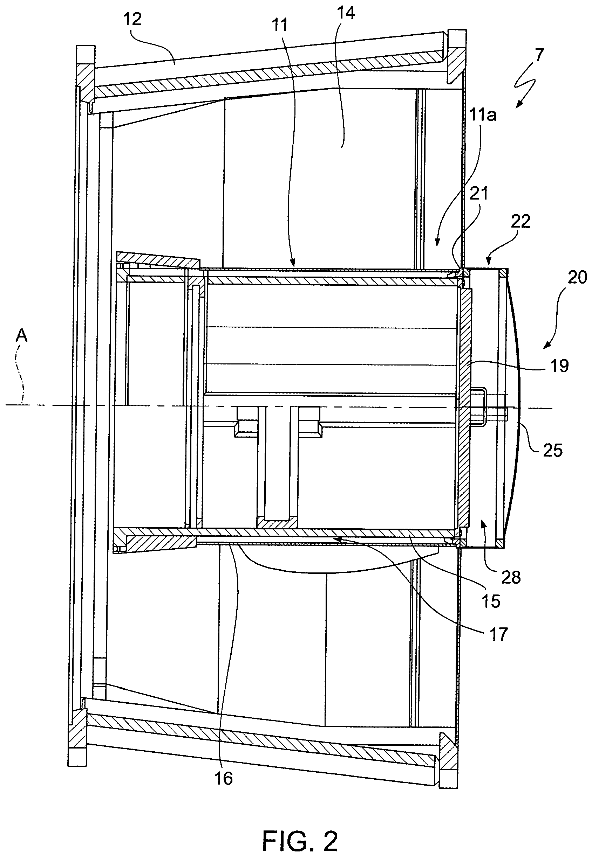

With reference to Figure 1, number 1 defines a gas turbine engine comprising a compressor 2, a combustor assembly 3, a turbine 5, an exhaust gas housing 7 and an axial exhaust diffuser 8, all extending about a longitudinal axis, which is indicated by A in figure 2. In one embodiment (not shown), the diffuser may be a radial diffuser.

The compressor 2 feeds the first combustor assembly 3 with a flow of compressed air drawn from outside.

In one embodiment, the first combustor assembly 3 comprises an annular combustion chamber 9 and a plurality of burners 10 circumferentially distributed about the longitudinal axis A. However, the combustor assembly could be of a different type, for example a silos combustor, a can or can-annular combustor with single or sequential stages.

The turbine 5 receives and expands a flow of hot gas from the combustor assembly 3 to extract mechanical work, which is transferred to an external user, typically an electric generator, here not shown.

The hot gas is then conveyed through the exhaust gas housing 7 and the exhaust diffuser 8. The exhaust gas housing 7 and the exhaust diffuser 8 extend along the longitudinal axis A immediately downstream of the turbine 5.

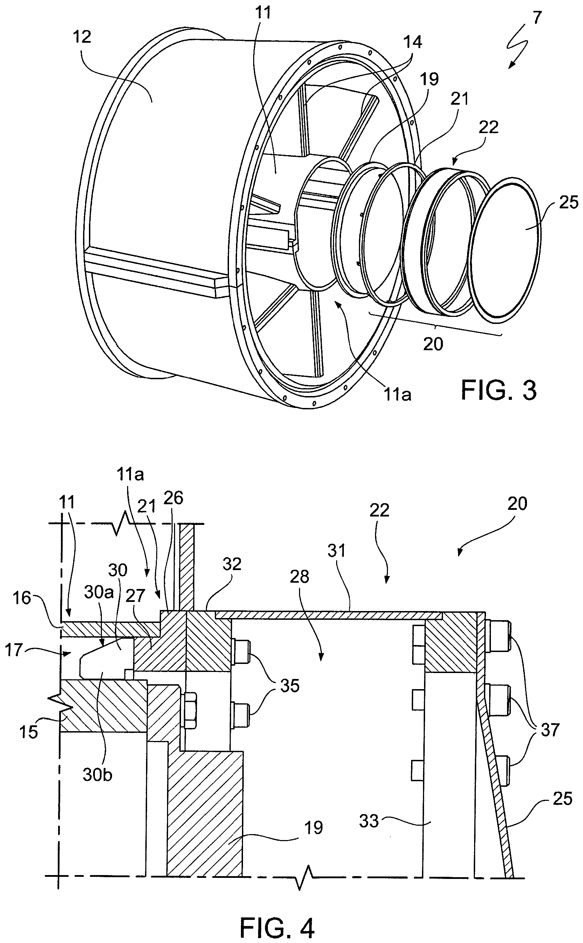

With reference to figures 2 and 3, the exhaust gas housing 7 comprises an exhaust hub 11 and an outer casing 12, that respectively define an inner boundary and an outer boundary of a portion of an exhaust flow path. Struts 14 connect the exhaust hub 11 to the outer casing 12.

The exhaust hub 11 comprises a bearing casing 15 and a cylindrical casing 16 arranged concentrically around the bearing casing 15 (see the enlarged detail of figure 4). An annular gap 17 is defined between the bearing casing 15 and the cylindrical casing 16.

The bearing casing 15 accommodates rear bearings 18 of a rotor 100 (not shown in figure 2; see figure 1) of the gas turbine engine 1. The bearing casing 15 is closed by an axially inner cover 19 at a rear end 11a of the exhaust hub 11. The cylindrical casing 16 defines the inner boundary of the flow path in the exhaust gas housing 7.

The rear end 11a of the exhaust hub 11 is also sealingly closed by a hub cover assembly 20, which comprises an adapter ring 21, a spacer ring structure 22 and an external cover 25. In one embodiment, the adapter ring 21 and the spacer ring structure 22 are formed of respective separable halves, which join one another at a split plane of the gas turbine engine 1.

The adapter ring 21 is coaxially fitted to the rear end 11a of the exhaust hub 11 and is removably connectable to the spacer ring structure 22. More precisely, the adapter ring 21 has a radial flange 26 for connection to the spacer structure 22 and a circular coupling edge 27 extending axially from the flange 26 in a direction opposite to the spacer ring structure 22. A diameter of the circular coupling edge 27 is selected to allow insertion of the circular coupling edge 27 into the annular gap 17. The adapter ring may be welded to the rear end 11a of the exhaust hub 11, specifically to the cylindrical casing 16.

The adapter ring 21 also comprises a plurality of wedges 30 circumferentially arranged at a same distance from a center of the adapter ring 21. The wedges 30 project axially from the circumferential coupling edge 27 in a direction opposite to the spacer ring structure 22 and have respective radially outer faces 30a inclined inwards in a direction away from the adapter ring 22 (in use, toward the rear end 11a of the exhaust hub 11).

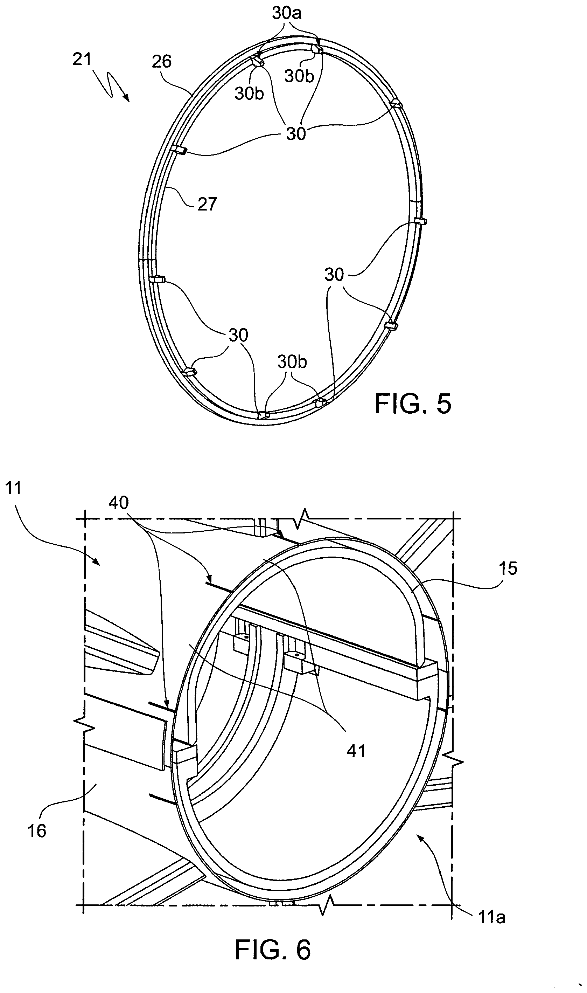

In the embodiment of figures 2-5, some of the wedges 30, for example two upper and two lower wedges 30, comprise respective feet 30b extending radially inwards. The wedges 30 equipped with feet 30b carry the mechanical load of the adapter ring 21, while the other wedges 30 may provide a centering function only and help fitting the adapter ring 21 into the gap 17. In other embodiments, however, the different wedge or all or none of the wedges may have feet.

The spacer ring structure 22 has a first axial end removably and sealingly connectable to the adapter ring 21, whereas a second axial end is closed by the external cover 25. Thus, the spacer ring structure 22 and the external cover 25 sealingly delimit a cylindrical chamber 28 laterally and axially on one side. The chamber 28 is axially delimited by the rear end 11a of the exhaust hub 11 on the opposite side. The spacer ring structure 22 and the chamber 28 need not be cylindrical or circular. For example, the spacer ring structure may have oval shape or frustoconical shape, either right or oblique. The chamber, as it is laterally defined by the spacer ring structure, will have the same shape. Likewise, in some embodiments the external cover 25 may not be coaxial with the rear end 11a of the exhaust hub 11 and the adapter ring 21. For example, if the spacer ring structure has oblique frustoconical shape, the external cover 25 is not coaxial.

Specifically, the spacer ring structure 22 comprises a ring shell 31, a coupling ring 32 at the first axial end and a cover ring 33 at the second axial end.

The ring shell 31 axially extends from the first axial end to the second axial end and laterally delimits the chamber 28. The coupling ring 32 and the cover ring 33 may be formed monolithically with the ring shell 31; as an alternative the coupling ring 32 and the cover ring 33 may be formed as separate components and subsequently welded to opposite ends of the ring shell 31.

The coupling ring 32 is removably connected to the adapter ring 21, e.g. by bolts 35. The connection also ensures that the chamber 28 is sealed and ingestion of hot gas is prevented. In one embodiment, the coupling ring 32 extends radially inwards from the ring shell 31.

The external cover 25 is secured to the cover ring 33 by bolts 37.

The hub cover assembly 20 may be natively included in the gas turbine engine 1 or may be subsequently applied to the rear end 11a of the exhaust hub 11.

In order to apply the hub cover assembly 20, the rear end 11a of the exhaust hub 11 may be prepared by forming longitudinal cuts 40 in the cylindrical casing 16. The longitudinal cuts 40 extend to the rear edge of the cylindrical casing and define axial tabs 41. Preparation is not strictly necessary and is particularly advantageous in case the rear end 11a of the exhaust hub 11 is severely deformed because of thermal and mechanical stress during use. If the shape of the rear end 11a has not substantially changed, the preparation may be omitted.

The adapter ring 21 is then coaxially fitted to the rear end 11a of the exhaust hub 11 around the inner cover 19. Specifically, the circular coupling edge 27 and the wedges 30 of the adapter ring 21 are inserted in the gap 17 between the bearing casing 15 and the cylindrical casing 16. Axial tabs 41, if present, help insertion of the wedges 30 and of the circular coupling edge 27. In turn, the adapter ring 21, once fitted to the rear end 11a of the exhaust hub 11 helps restore its original circular shape, especially for the cylindrical casing 16.

The adapter ring 21 is then welded to the cylindrical casing 16 through a welding cord, not shown.

Then, the coupling ring 32 at the first axial of the spacer ring structure 22 is removably and sealingly connected to the adapter ring 21 and the external cover 25 is applied to the second axial end of the spacer ring structure 22, thus forming the cylindrical chamber 28 at the rear end of the exhaust hub on a second side.

Finally, it is clear that modifications and variants can be made to the hub cover assembly and to the method described herein without departing from the present invention, as defined in the appended claims.

## Claims

1. A hub cover assembly for an exhaust gas housing of a heavy-duty gas turbine engine, comprising:
an adapter ring (21), configured to be coaxially fitted to a rear end (11a) of an exhaust hub (11) of a heavy-duty gas turbine engine;
a spacer ring structure (22), having a first axial end removably and sealingly connectable to the adapter ring (21); and
an external cover (25) applied to a second axial end of the spacer ring structure (22), whereby the spacer ring structure (22) and the external cover (25) sealingly delimit a chamber (28) laterally and axially on one side;
**characterized in that** the adapter ring (21) comprises a plurality of wedges (30) arranged at a same distance from a center of the adapter ring (21) and projecting axially in a direction opposite to the spacer ring structure (22).

2. The hub cover assembly according to claim 1, wherein at least some of the wedges (30) comprise respective feet (30b) extending radially inwards and preferably the wedges (30) have respective radially outer faces (30a) inclined inwards away from the adapter ring (21).

3. The hub cover assembly according to any one of the preceding claims, wherein the adapter ring (21) comprises a flange (26) and a circular coupling edge (27) extending axially from the flange (26) in a direction opposite to the spacer ring structure (22).

4. The hub cover assembly according to any one of the preceding claims, wherein the spacer ring structure (22) comprises:
a ring shell (31), axially extending from the first axial end to the second axial end;
a coupling ring (32) at the first axial end, the coupling ring (32) being removably and sealingly connectable to the adapter ring (21); and
a cover ring (33) at the second axial end, the external cover (25) being secured to the cover ring (32).

5. The hub cover assembly according to claim 4, wherein the coupling ring (32) extends radially inwards from the ring shell (31).

6. The hub cover assembly according to any one of the preceding claims, wherein the adapter ring (21) and the spacer ring structure (22) are formed of respective separable halves.

7. A heavy-duty gas turbine engine, comprising an exhaust hub (11) extending along an axis (A) and a hub cover assembly (20) according to any one of the preceding claims, sealingly closing a rear end (11a) of the exhaust hub (11).

8. The heavy-duty gas turbine engine according to claim 7, wherein the exhaust hub (11) comprises an inner cover (19) and the adapter ring (21) is coaxially fitted to the rear end (11a) of an exhaust hub (11) around the inner cover (19).

9. The heavy-duty gas turbine engine according to claim 7 or 8, wherein the exhaust hub (11) comprises a bearing casing (15) closed by the inner cover (19) and a cylindrical casing (16) arranged concentrically around the bearing casing (15), with a gap (17) therebetween.

10. The heavy-duty gas turbine engine according to claim 9, wherein the wedges (30) of the adapter ring (21) are inserted into the gap (17) and the adapter ring (21) is preferably welded to the cylindrical casing (16).

11. The heavy-duty gas turbine engine according to any one of claims 7 to 10, comprising an exhaust gas housing (7), wherein:
the bearing casing (15) and the cylindrical casing (16) are part of the exhaust gas housing (7);
the exhaust gas housing (7) further comprises an outer casing (12);
the cylindrical casing (16) and the outer casing (12) define an inner boundary and an outer boundary of an exhaust flow path in the exhaust gas housing (7), respectively; and
the bearing casing (15) and the cylindrical casing (16) are connected to the outer casing (12) by struts.

12. A method of retrofitting a heavy-duty gas turbine engine, comprising an exhaust hub (11) extending along an axis (A), the method comprising:
coaxially fitting an adapter ring (21) to a rear end (11a) of the exhaust hub (11);
removably and sealingly connecting a first axial end of a spacer ring structure (22) to the adapter ring (21); and
applying an external cover (25) to a second axial end of the spacer ring structure (22), whereby the spacer ring structure (22) and the external cover (25) sealingly delimit a cylindrical chamber (28) laterally and axially on a first side, the chamber (28) being axially delimited by the rear end (11a) of the exhaust hub (11) on a second side;
**characterized in that** the exhaust hub (11) comprises a bearing casing (15) closed by the inner cover (19) and a cylindrical casing (16) arranged concentrically around the bearing casing (15), with a gap (17) therebetween, wherein the adapter ring (21) comprises a plurality of wedges (30) arranged at a same distance from a center of the adapter ring (21) and projecting axially in a direction opposite to the spacer ring structure (22); and wherein coaxially fitting the adapter ring (21) comprises inserting the wedges (30) of the adapter ring (21) into the gap (17).

13. The method according to claim 12, wherein coaxially fitting the adapter ring (21) comprises welding the adapter ring (21) to the cylindrical casing (16).

14. The method according to claim 12 or 13, comprising forming longitudinal cuts (40) in the cylindrical casing (16), wherein the longitudinal cuts (40) extend to a rear edge of the cylindrical casing (16) and define axial tabs (41).

## Patentansprüche

1. Nabenabdeckungs-Anordnung für ein Abgasgehäuse einer Hochleistungs-Gasturbinenmaschine, umfassend:
einen Adapterring (21), der dazu konfiguriert ist, koaxial an einem hinteren Ende (11a) einer Abgasnabe (11) einer Hochleistungs-Gasturbinenmaschine angebracht zu werden;
eine Abstandsringstruktur (22), die ein erstes axiales Ende aufweist, das abnehmbar und abdichtend mit dem Adapterring (21) verbindbar ist; und
eine äußere Abdeckung (25), die an einem zweiten axialen Ende der Abstandsringstruktur (22) angebracht ist, wobei die Abstandsringstruktur (22) und die äußere Abdeckung (25) eine Kammer (28) lateral und axial auf einer Seite abdichtend begrenzen;
**dadurch gekennzeichnet, dass** der Adapterring (21) mehrere Keile (30) umfasst, die in gleichem Abstand von einer Mitte des Adapterrings (21) angeordnet sind und axial in einer Richtung entgegengesetzt zu der Abstandsringstruktur (22) hervorstehen.

2. Nabenabdeckungs-Anordnung nach Anspruch 1, wobei wenigstens einige der Keile (30) entsprechende Füße (30b) aufweisen, die sich radial nach innen erstrecken, wobei die Keile (30) vorzugsweise entsprechende radial äußere Flächen (30a) aufweisen, die von dem Adapterring (21) weg nach innen geneigt sind.

3. Nabenabdeckungs-Anordnung nach einem der vorangehenden Ansprüche, wobei der Adapterring (21) einen Flansch (26) und eine kreisförmige Kupplungskante (27) umfasst, die sich axial von dem Flansch (26) in einer Richtung entgegengesetzt zu der Abstandsringstruktur (22) erstreckt.

4. Nabenabdeckungs-Anordnung nach einem der vorangehenden Ansprüche, wobei die Abstandsringstruktur (22) umfasst:
eine Ringhülse (31), die sich von dem ersten axialen Ende zu dem zweiten axialen Ende axial erstreckt;
einen Kupplungsring (32) an dem ersten axialen Ende, wobei der Kupplungsring (32) abnehmbar und abdichtend mit dem Adapterring (21) verbindbar ist; und
einen Abdeckring (33) an dem zweiten axialen Ende, wobei die äußere Abdeckung (25) an dem Abdeckring (32) befestigt ist.

5. Nabenabdeckungs-Anordnung nach Anspruch 4, wobei sich der Kupplungsring (32) von der Ringhülse (31) radial nach innen erstreckt.

6. Nabenabdeckungs-Anordnung nach einem der vorangehenden Ansprüche, wobei der Adapterring (21) und die Abstandsringstruktur (22) aus entsprechenden trennbaren Hälften gebildet sind.

7. Hochleistungs-Gasturbinenmaschine, die eine sich entlang einer Achse (A) erstreckende Abgasnabe (11) und eine Nabenabdeckungs-Anordnung (20) nach einem der vorangehenden Ansprüche, die ein hinteres Ende (11a) der Abgasnabe (11) abdichtend verschließt, umfasst.

8. Hochleistungs-Gasturbinenmaschine nach Anspruch 7, wobei die Abgasnabe (11) eine innere Abdeckung (19) umfasst und der Adapterring (21) koaxial an dem hinteren Ende (11a) einer Abgasnabe (11) um die innere Abdeckung (19) herum angebracht ist.

9. Hochleistungs-Gasturbinenmaschine nach Anspruch 7 oder 8, wobei die Abgasnabe (11) ein von der inneren Abdeckung (19) verschlossenes Lagergehäuse (15) und ein konzentrisch um das Lagergehäuse (15) angeordnetes zylindrisches Gehäuse (16) mit einem dazwischen liegenden Spalt (17) umfasst.

10. Hochleistungs-Gasturbinenmaschine nach Anspruch 9, wobei die Keile (30) des Adapterrings (21) in den Spalt (17) eingesetzt sind und der Adapterring (21) vorzugsweise an das zylindrische Gehäuse (16) geschweißt ist.

11. Hochleistungs-Gasturbinenmaschine nach einem der Ansprüche 7 bis 10, die ein Abgasgehäuse (7) umfasst, wobei:
das Lagergehäuse (15) und das zylindrische Gehäuse (16) Teil des Abgasgehäuses (7) sind;
das Abgasgehäuse (7) ferner ein äußeres Gehäuse (12) umfasst;
das zylindrische Gehäuse (16) und das äußere Gehäuse (12) eine innere Begrenzung bzw. eine äußere Begrenzung eines Abgasströmungspfades in dem Abgasgehäuse (7) definieren; und
das Lagergehäuse (15) und das zylindrische Gehäuse (16) mit dem äußeren Gehäuse (12) durch Streben verbunden sind.

12. Verfahren zur Nachrüstung einer Hochleistungs-Gasturbinenmaschine, die eine Abgasnabe (11) umfasst, die sich entlang einer Achse (A) erstreckt, wobei das Verfahren umfasst:
koaxiales Anbringen eines Adapterrings (21) an einem hinteren Ende (115) der Abgasnabe (11);
abnehmbares und dichtendes Verbinden eines ersten axialen Endes einer Abstandsringstruktur (22) mit dem Adapterring (21); und
Anbringen einer äußeren Abdeckung (25) an einem zweiten axialen Ende der Abstandsringstruktur (22), wobei die Abstandsringstruktur (22) und die äußere Abdeckung (25) eine zylindrische Kammer (28) lateral und axial an einer ersten Seite abdichtend begrenzen, wobei die Kammer (28) durch das hintere Ende (11a) der Abgasnabe (11) an einer zweiten Seite axial begrenzt ist;
**dadurch gekennzeichnet, dass** die Abgasnabe (11) ein Lagergehäuse (15), das durch die innere Abdeckung (19) verschlossen ist, und ein zylindrisches Gehäuse (16), das konzentrisch um das Lagergehäuse (15) angeordnet ist, mit einem Spalt (17) dazwischen umfasst, wobei der Adapterring (21) mehrere Keile (30) umfasst, die in einem gleichen Abstand von einer Mitte des Adapterrings (21) angeordnet sind und axial in einer Richtung entgegengesetzt zu der Abstandsringstruktur (22) hervorstehen; und wobei das koaxiale Anbringen des Adapterrings (21) das Einsetzen der Keile (30) des Adapterrings (21) in den Spalt (17) umfasst.

13. Verfahren nach Anspruch 12, wobei das koaxiale Anbringen des Adapterrings (21) ein Schweißen des Adapterrings (21) an das zylindrische Gehäuse (16) umfasst.

14. Verfahren nach Anspruch 12 oder 13, das die Ausbildung von Längsschnitten (40) in dem zylindrischen Gehäuse (16) umfasst, wobei sich die Längsschnitte (40) bis zu einer hinteren Kante des zylindrischen Gehäuses (16) erstrecken und axiale Laschen (41) definieren.

## Revendications

1. Ensemble couvercle de moyeu pour un carter de gaz d'échappement d'une turbine à gaz de grande puissance, comprenant :
une bague de raccord (21) configurée pour être montée, de manière coaxiale, sur une extrémité arrière (11a) d'un moyeu d'échappement (11) d'une turbine à gaz de grande puissance ;
une structure de bague d'espacement (22), ayant une première extrémité axiale pouvant être raccordée, de manière amovible et étanche, à la bague de raccord (21) ; et
un couvercle externe (25) appliqué sur une deuxième extrémité axiale de la structure de bague d'espacement (22), moyennant quoi la structure de bague d'espacement (22) et le couvercle externe (25) délimitent, de manière étanche, une chambre (28) latéralement et axialement sur un côté ;
**caractérisé en ce que** la bague de raccord (21) comprend une pluralité de cales (30) agencées à une même distance d'un centre de la bague de raccord (21) et faisant saillie axialement dans une direction opposée à la structure de bague d'espacement (22).

2. Ensemble couvercle de moyeu selon la revendication 1, dans lequel au moins certaines des cales (30) comprennent des pieds (30b) respectifs s'étendant radialement vers l'intérieur et de préférence les cales (30) ont des faces radialement externes (30a) respectives inclinées vers l'intérieur à l'opposé de la bague de raccord (21).

3. Ensemble couvercle de moyeu selon l'une quelconque des revendications précédentes, dans lequel la bague de raccord (21) comprend une bride (26) et un bord de couplage circulaire (27) s'étendant axialement à partir de la bride (26) dans une direction opposée à la structure de bague d'espacement (22).

4. Ensemble couvercle de moyeu selon l'une quelconque des revendications précédentes, dans lequel la structure de bague d'espacement (22) comprend :
une coque de bague (31) s'étendant axialement à partir de la première extrémité axiale jusqu'à la deuxième extrémité axiale ;
une bague de couplage (32) au niveau de la première extrémité axiale, la bague de couplage (32) pouvant être raccordée de manière amovible et étanche à la bague de raccord (21) ; et
une bague de couvercle (33) au niveau de la deuxième extrémité axiale, le couvercle externe (25) étant fixé sur la bague de couvercle (32).

5. Ensemble couvercle de moyeu selon la revendication 4, dans lequel la bague de couplage (32) s'étend radialement vers l'intérieur à partir de la coque de bague (31).

6. Ensemble couvercle de moyeu selon l'une quelconque des revendications précédentes, dans lequel la bague de raccord (21) et la structure de bague d'espacement (22) sont formées avec des moitiés séparables respectives.

7. Turbine à gaz de grande puissance, comprenant un moyeu d'échappement (11) s'étendant le long d'un axe (A) et un ensemble couvercle de moyeu (20) selon l'une quelconque des revendications précédentes, fermant, de manière étanche, une extrémité arrière (11a) du moyeu d'échappement (11).

8. Turbine à gaz de grande puissance selon la revendication 7, dans laquelle le moyeu d'échappement (11) comprend un couvercle interne (19) et la bague de raccord (21) est montée, de manière coaxiale, à l'extrémité arrière (11a) d'un moyeu d'échappement (11) autour du couvercle interne (19).

9. Turbine à gaz de grande puissance selon la revendication 7 ou 8, dans laquelle le moyeu d'échappement (11) comprend un carter de palier (15) fermé par le couvercle interne (19) et un carter cylindrique (16) agencé de manière concentrique autour du carter de palier (15), avec un interstice (17) entre eux.

10. Turbine à gaz de grande puissance selon la revendication 9, dans laquelle les cales (30) de la bague de raccord (21) sont insérées dans l'interstice (17) et la bague de raccord (21) est de préférence soudée sur le carter cylindrique (16).

11. Turbine à gaz de grande puissance selon l'une quelconque des revendications 7 à 10, comprenant un boîtier de gaz d'échappement (7), dans laquelle :
le carter de palier (15) et le carter cylindrique (16) font partie du boîtier de gaz d'échappement (7) ;
le boîtier de gaz d'échappement (7) comprend en outre un carter externe (12) ;
le carter cylindrique (16) et le carter externe (12) définissent une limite interne et une limite externe d'une trajectoire d'écoulement d'échappement dans le boîtier de gaz d'échappement (7), respectivement ; et
le carter de palier (15) et le carter cylindrique (16) sont raccordés au carter externe (12) par des entretoises.

12. Procédé pour moderniser une turbine à gaz de grande puissance comprenant un moyeu d'échappement (11) s'étendant le long d'un axe (A), le procédé comprenant les faits de :
monter de manière coaxiale une bague de raccord (21) sur une extrémité arrière (11a) du moyeu d'échappement (11) ;
raccorder, de manière amovible et étanche, une première extrémité axiale d'une structure de bague d'espacement (22) à la bague de raccord (21) ; et
appliquer un couvercle externe (25) sur une deuxième extrémité axiale de la structure de bague d'espacement (22), moyennant quoi la structure de bague d'espacement (22) et le couvercle externe (25) délimitent, de manière étanche, une chambre cylindrique (28) latéralement et axialement sur un premier côté, la chambre (28) étant limitée, de manière axiale, par l'extrémité arrière (11a) du moyeu d'échappement (11) sur un deuxième côté ;
**caractérisé en ce que** le moyeu d'échappement (11) comprend un carter de palier (15) fermé par le couvercle interne (19) et un carter cylindrique (16) agencé de manière concentrique autour du carter de palier (15), avec un interstice (17) entre eux, dans lequel la bague de raccord (21) comprend une pluralité de cales (30) agencées à une même distance d'un centre de la bague de raccord (21) et faisant saillie axialement dans une direction opposée à la structure de bague d'espacement (22) ; et dans lequel le fait de monter la bague de raccord (21) de manière coaxiale comprend le fait d'insérer les cales (30) de la bague de raccord (21) dans l'interstice (17).

13. Procédé selon la revendication 12, dans lequel le fait de monter la bague de raccord (21) de manière coaxiale comprend le fait de souder la bague de raccord (21) sur le carter cylindrique (16).

14. Procédé selon la revendication 12 ou 13, comprenant le fait de former des découpes longitudinales (40) dans le carter cylindrique (16), dans lequel les découpes longitudinales (40) s'étendent vers un bord arrière du carter cylindrique (16) et définissent des languettes axiales (41).
